# EUROPÄISCHE PATENTANMELDUNG

(11) **EP 1 820 999 A2**
(43) Veröffentlichungstag der Anmeldung: **22.08.2007**
(21) Anmeldenummer: 07003116.6
(22) Anmeldetag: 14.02.2007
(51) Int. Cl.: F16G 11/02

(54) **Verfahren zur Ausbildung einer Verankerung eines länglichen Faserverbundteils**

(30) Priorität: 21.02.2006 AT 2772006
(71) Anmelder: Faigle Kunststoffe Gesellschaft m.b.H., 6971 Hard (AT)
(72) Erfinder: Decker, Thomas, 6923 Lauterach (AT)
(74) Vertreter: Hofmann, Ralf U.

(57) **Zusammenfassung**

Bei einem Verfahren zur Ausbildung einer eine Längskraft übertragenden Verankerung eines länglichen Faserverbundteils (1), insbesondere in Form einer Zug- oder Druckstange, welches ein thermoplastisches Matrixmaterial (4) und darin eingebettete Fasern (3) besitzt, an einem Krafteinleitungselement (2), das eine Kavität (5) aufweist, die das Faserverbundteil (1) über einen Verbindungsabschnitt (6) seiner Längserstreckung aufnimmt wird zwischen dem Faserverbundteil (1) und dem Krafteinleitungselement (2) eine in Längsrichtung (16) des Faserverbundteils (1) wirkende formschlüssige Verbindung ausgebildet. Zur Ausbildung der formschlüssigen Verbindung wird die Geometrie des Faserverbundteils (1), während seine Temperatur über der Glasübergangstemperatur des Matrixmaterials (4) des Faserverbundteils (1) liegt, im Verbindungsabschnitt (6) durch eine auf die äußere Oberfläche des Faserverbundteils (1) einwirkende Presskraft (17) derart geändert, das die Querschnittsfläche des Verbindungsabschnitts (6) über dessen Längsausdehnung in ihrem Flächeninhalt geändert wird, wobei sich der auf zumindest eine bestimmte rechtwinklig zur Längsrichtung des Faserverbundteils (1) liegende Richtung bezogene Durchmesser des Faserverbundteils (1) über die Längserstreckung des Verbindungsabschnitts (6) ändert.

## Beschreibung

Die Erfindung betrifft ein Verfahren zur Ausbildung einer eine Längskraft übertragenden Verankerung eines länglichen Faserverbundteils, insbesondere in Form einer Zug- oder Druckstange, welches ein thermoplastisches Matrixmaterial und darin eingebettete Fasern besitzt, an einem Krafteinleitungselement, das eine Kavität aufweist, die das Faserverbundteil über einen Verbindungsabschnitt seiner Längserstreckung aufnimmt, wobei zwischen dem Faserverbundteil und dem Krafteinleitungselement eine in Längsrichtung des Faserverbundteils wirkende formschlüssige Verbindung ausgebildet wird. Weiters betrifft die Erfindung eine Verankerung zur Übertragung einer Längskraft zwischen einem länglichen Faserverbundteil und einem Krafteinleitungselement.

Wegen der problematischen Krafteinleitung in längliche Faserverbundteile, beispielsweise Faserverbundstangen, werden als Zug- oder Druckstangen meist Stahlstangen eingesetzt, obwohl Faserverbundstangen eine Reihe von herausragenden Eigenschaften aufweisen. So zeichnen sie sich u.a. durch ihr geringes Gewicht, Korrosionsbeständigkeit und elektrisch isolierende Eigenschaften aus. Die Festigkeits- und Steifigkeitseigenschaften von Faserverbundstangen sind hervorragend, ein Problem besteht aber darin, Zug- und Druckkräfte werkstoffgerecht und kraftflussgerecht in stangenförmige Faserverbundteile einzuleiten.

Beispielsweise wurde hierzu eine Fertigung von Faserverbundstangen als Endlosschlaufen durchgeführt, wobei die Zugstange eine Schlaufe um einen Bolzen zur Krafteinleitung ausbildet. Eine solche Fertigung von Endlosschlaufen aus Faserverbundwerkstoff ist jedoch sehr aufwendig, u.a. wird für jede Zugstangenlänge ein Werkzeug geeigneter Länge benötigt.

Bekanntgeworden sind weiters stoffschlüssige Verbindungen in Form von Klebeverbindungen und Gussverankerungen zum Befestigen von Zugstangen in einem Krafteinleitungselement, beispielsweise aus der DE 39 42 535 A1. Für solche Verklebungen und Vergussverankerungen muss jedoch eine ausreichende Klebefläche verfügbar sein, die nicht in allen Anwendungsfällen vorhanden ist. Beispielsweise beträgt die notwendige Klebelänge für einen Faserverbundstab mit einem Durchmesser von 12 mm etwa 500 bis 700 mm.

Weiters wurden kraftschlüssige Verbindungen zwischen dem Ende einer Zugstange und einem Krafteinleitungselement beschrieben. Bei der aus der EP 0 001 235 A1 bekannten Verbindung besteht hierbei das Krafteinleitungselement aus einem inneren konusförmigen Teil, das in ein äußeres Teil mit einer entsprechenden Innenkontur eingesetzt ist und von diesem mit der Zugstange verspannbar ist. Nachteilig bei kraftschlüssigen Verbindungen sind die Unsicherheiten durch sich möglicherweise ändernde Reibverhältnisse und Vorspannung und ein möglicher Schwingreibverschleiß.

Eine Verankerung der eingangs genannten Art ist ebenfalls bekannt und u. a. in der prioritätsälteren, nicht vorveröffentlichten DE 10 2004 038 082 A1 beschrieben. Hierbei wird zusammen mit dem Krafteinleitungselement ein eine Spitze aufweisender Spreizkörper auf das Ende der Zugstange achsial zugeführt. Der Spreizkörper wird in die auf Erweichungstemperatur gebrachte Zugstange zentrisch eingepresst, wobei das radial verdrängte Material der Zugstange in einen Raum zwischen der Außenkontur des Spreizkörpers und der Innenkontur des Krafteinleitungselements abgeleitet wird und das abgeleitete Material weiters hinter dem Spreizkörper zusammengeführt wird, um den Spreizkörper im Ende der Zugstange einzuschließen. Auf diese Weise wird ein in Längsrichtung des Faserverbundteils wirkender Formschluss zwischen dem Faserverbundteil und dem Krafteinleitungselement ausgebildet, über welchen Zugkräfte aufgenommen werden können. Nachteilig ist u.a. die Aufwendigkeit des Verfahrens. Auch kann es durch die sehr starke Umformung des Faserverbundmaterials im Bereich des Verbindungsabschnittes zu Unsicherheiten bezüglich der statischen und dynamischen Eigenschaften des verankerten Faserverbundteils in diesem Bereich kommen und ist dieses Verfahren nicht für alle Arten von Faserverbundteilen geeignet.

Bei der aus der prioritätsälteren, nicht vorveröffentlichten GB 2 418 713 A bekannten Verankerung wird ein Dorn axial in den Endabschnitt des Faserverbundteils eingebracht und eine Hülse um diesen Endabschnitt des Faserverbundteils gelegt. Der Dorn oder die Hülse weisen eine nichtzylindrische Oberfläche auf und nach Erhitzen des Materials des Faserverbundteils wird der Dorn aufgeweitet oder die Hülse kontrahiert, um den Endabschnitt des Faserverbundteils zwischen diesen beiden Teilen festzulegen.

Die GB 816 926 A beschreibt eine Verbindung zwischen einem nicht gattungsgemäßen Faserverbundteil, welches ein duroplastisches Matrixmaterial aufweist, mit einer das Faserverbundteil außen umgebenden Hülse. Die Hülse wird auf das Faserverbundteil aufgepresst, wobei es zu einer kraftschlüssigen Verbindung zwischen der Hülse und dem Faserverbundteil kommt.

Eine kraftschlüssige Verbindung eines Kabels, welches beispielsweise aus Kunststoff bestehende, von einem Kunststoffmantel umgebende Fasern aufweist, mit einer Hülse ist aus der GB 2 150 164 A bekannt.

Aufgabe der Erfindung ist es, ein einfach durchführbares Verfahren der eingangs genannten Art bereitzustellen, durch welches eine sichere und zuverlässige Verankerung eines länglichen Faserverbundteils an einem Krafteinleitungselement erreicht werden kann, bzw. eine sichere und zuverlässige solche Verankerung bereitzustellen. Erfindungsgemäß gelingt dies durch ein Verfahren mit den Merkmalen des Anspruchs 1 bzw. durch eine Verankerung mit den Merkmalen des Anspruchs 12.

Beim erfindungsgemäßen Verfahren wird somit eine den Formschluss herstellende Geometrieänderung des Faserverbundteils durch die von außen auf das Faserverbundteil einwirkende Presskraft erzeugt, ohne dass wie beim Stand der Technik der Formschluss mittels einer dritten Komponente, wie Klebstoff, Vergussmasse, Verdrängungskörper usw., ausgebildet wird. Der Formschluss wird direkt zwischen der geänderten Geometrie des Faserverbundteils in seinem Verbindungsabschnitt und der Geometrie des Krafteinleitungselements ausgebildet. Bei der Änderung der Geometrie des Verbindungsabschnitts kommt es zu einer Änderung des Flächeninhalts der Querschnittsfläche des Verbindungsabschnitts über dessen Längsausdehnung. Das bedeutet, dass durch die einwirkende Presskraft thermoplastisches Matrixmaterial, dessen Temperatur über seiner Glasübergangstemperatur liegt, aus einem Bereich, in dem die Presskraft einwirkt, verdrängt wird. Es tritt also ein Fließen von thermoplastischem Matrixmaterial in Längsrichtung des Faserverbundteils auf.

Das aus dem Bereich der einwirkenden Presskraft verdrängte Matrixmaterial kann zu einer Verdickung (Querschnittsvergrößerung) an einer anderen Stelle des Faserverbundteils führen und/oder kann aus einem stirnseitigen Ende des Faserverbundteils zumindest teilweise austreten.

Bei der Änderung der Querschnittsfläche des Verbindungsabschnitts kommt es zu einer Änderung des Durchmessers des Faserverbundteils über die Längserstreckung des Verbindungsabschnitts, zumindest bezogen auf mindestens eine bestimmte rechtwinklig zur Längsrichtung des Faserverbundteils liegende Richtung.

In einer Ausführungsform der Erfindung wird die Presskraft mittels eines Presswerkzeugs direkt auf die äußere Oberfläche des Faserverbundteils ausgeübt (während die Temperatur des Faserverbundteils im Verbindungsabschnitt oberhalb der Glasübergangstemperatur liegt). Nach der in dieser Weise durchgeführten Geometrieänderung des Faserverbundteils im Verbindungsabschnitt und dem Auskühlen des Faserverbundteils wird das Krafteinleitungselement am Verbindungsabschnitt angebracht, welches in diesem Fall mindestens zwei getrennte, miteinander verbindbare Teile umfasst, die beispielsweise jeweils halbschalenförmig ausgebildet sind.

In einer anderen Ausführungsform der Erfindung wirkt ein Presswerkzeug auf das bereits auf den Verbindungsabschnitt des Faserverbundteils aufgesetztes Krafteinleitungselement ein, wobei die Presskraft über das Krafteinleitungselement auf das Faserverbundteil übertragen wird und das Krafteinleitungselement gleichzeitig mit dem Faserverbundteil zur Ausbildung des in Längsrichtung des Faserverbundteils wirkenden Formschlusses verformt wird.

Bei einer durch ein erfindungsgemäßes Verfahren hergestellten Verankerung können die Fasern des Faserverbundteils in vorteilhafter Weise erhalten bleiben, und zwar in einer günstigen Kraftflussrichtung. Die bei der Ausbildung der Verankerung ausgeübte Presskraft wirkt vorteilhafter Weise quer zur Längsrichtung des Faserverbundteils auf dessen Mantelfläche ein.

Weitere Vorteile und Einzelheiten der Erfindung werden im Folgenden anhand der beiliegenden Zeichnung erläutert. In dieser zeigen:
- Fig. 1: eine schematische Darstellung eines Verfahrensschrittes zur Verankerung des Faserverbundteils am Krafteinleitungselement gemäß einer Ausführungsform der Erfindung, im Längsmittelschnitt;
- Fig. 2: die gemäß dieser Ausführungsform der Erfindung fertiggestellte Verankerung im Längsmittelschnitt;
- Fig. 3: einen Schnitt entlang der Linie A-A von Fig. 2;
- Fig. 4: einen Schnitt entlang der B-B von Fig. 2;
- Fig. 5: einen Schnitt entlang der Linie C-C von Fig. 2;
- Fig. 6: die Verankerung gemäß einer etwas modifizierten Ausführungsform;
- Fig. 7: eine schematische Darstellung eines Verfahrensschritts eines erfindungsgemäßen Verfahrens gemäß einer weiteren Ausführungsform, im Längsmittelschnitt;
- Fig. 8: einen Längsmittelschnitt der fertiggestellten Verankerung gemäß einer weiteren Ausführungsform;
- Fig. 9: bis Fig. 12 Schnitte entlang der Linien D-D, E-E, F-F und G-G von Fig. 8.

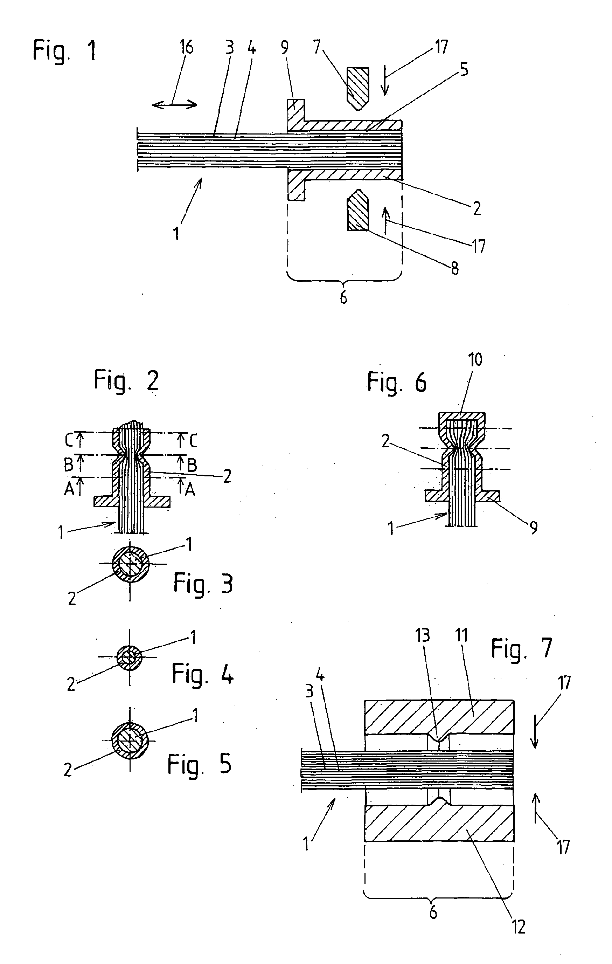

Ein erstes Ausführungsbeispiel der Erfindung wird im Folgenden anhand der Fig. 1 bis 5 erläutert. Durch ein Verfahren gemäß der Erfindung soll ein längliches bzw. stangenförmiges Faserverbundteil 1 an einem Krafteinleitungselement 2 derart verankert werden, dass eine zumindest in eine der Längsrichtungen des Faserverbundteils 1, die in Fig. 1 durch den Doppelpfeil 16 angedeutet sind, wirkende Längskraft übertragen werden kann.

Das Faserverbundteil 1, welches insbesondere als Zug- oder Druckstange ausgebildet ist, kann unterschiedliche Querschnittsgeometrien aufweisen, wobei die Querschnittsfläche und -geometrie vor Durchführung des erfindungsgemäßen Verfahrens z.B. über die gesamte Länge des Faserverbundteils konstant ist. Im Ausführungsbeispiel gemäß den Fig. 1 bis 5 besitzt das Faserverbundteil vor Durchführung des erfindungsgemäßen Verfahrens, zumindest in einem Verbindungsabschnitt 6, einen konstanten kreisförmigen Querschnitt. Auch andere, beispielsweise rechteckige Querschnittsprofile sind denkbar und möglich.

Das Faserverbundteil 1 besitzt Fasern 3, die in einem Matrixmaterial 4, welches von einem thermoplastischen Kunststoff gebildet wird, eingebettet sind. Die Fasern 3 können als durchgehende Endlosfasern oder als Langfasern (vorzugsweise mit einer Länge von mehr als 10 mm) ausgebildet sein und sind über den Querschnitt des Faserverbundteils verteilt (gleichmäßig oder ungleichmäßig). Die Fasern 3 können unidirektional ausgerichtet sein, wobei sie parallel zur Längsrichtung 16 (bzw. Längsachse) des Faserverbundteils 1 verlaufen, oder eine multidirektionale Faserorientierung aufweisen, beispielsweise in Form eines zusammengedrehten Geflechts, Gewirks oder Gestricks ausgebildet sein. Derartige Faserverbundteile 1 sind bekannt und werden durch Extrusion oder Pultrusion in einem kontinuierlichen Herstellungsprozess hergestellt. Die Fasern 3 können aus unterschiedlichen Materialien ausgebildet sein, beispielsweise in Form von Kohlenstoff-, Glas-, Mineral-, Metallfasern oder Mischungen hiervon.

Beim Ausführungsbeispiel gemäß den Fig. 1 bis 5 wird das hülsenförmig ausgebildete Krafteinleitungselement 2 auf das Faserverbundteil 1 in achsialer Richtung desselben aufgeschoben, so dass die Kavität (=der innere Hohlraum) des Krafteinleitungselements 2 das Faserverbundteil 1 über einen Verbindungsabschnitt 6 desselben aufnimmt, wobei es das Krafteinleitungselement 2 über den Verbindungsabschnitt 6 mit geringem Spiel umgibt. Das Faserverbundteil 1 besitzt im Verbindungsabschnitt 6 hierbei noch seine ursprüngliche Geometrie, d.h. der Verbindungsabschnitt 6 ist gerade und koaxial zum übrigen Teil des Faserverbundteils 1 und seine Querschnittskontur und Querschnittsfläche sind über seine Längserstreckung konstant.

Zur Ausbildung einer in Längsrichtung des Faserverbundteils 1 wirkenden formschlüssigen Verbindung zwischen dem Faserverbundteil 1 und dem Krafteinleitungselement 2 wird das Faserverbundteil 1 in der Folge zumindest im Verbindungsabschnitt 6 auf eine Temperatur erwärmt, die zumindest oberhalb der Glasübergangstemperatur (Tg) des Matrixmaterials 4 liegt, vorzugsweise auf eine Temperatur oberhalb des Schmelzpunkts des Matrixmaterials 4. Diese Erwärmung des Faserverbundteils 1 kann beispielsweise durch eine Erwärmung des Krafteinleitungselements 2 mittels einer Heizeinrichtung erfolgen. Das Faserverbundteil 1 könnte auch bereits vor dem Aufstecken des Krafteinleitungselements 2 auf diese Temperatur erwärmt worden sein. Durch die Erwärmung auf die genannte Temperatur kommt es zu einer Erweichung des Matrixmaterials 4, so dass dieses (bei Atmosphärendruck) fließfähig ist.

In der Folge wird auf das Krafteinleitungselement 2 mittels eines Presswerkzeugs von außen eine Presskraft ausgeübt, die quer, vorzugsweise rechtwinklig, zur Längsrichtung 16 des Faserverbundteils 1 auf das Krafteinleitungselement 2 wirkt. Das Presswerkzeug kann beispielsweise mehrere in Umfangsrichtung aneinander anschließende Pressbacken 7, 8 aufweisen, die radial gegen das Krafteinleitungselement 2 beaufschlagt werden. Durch die auf das Krafteinleitungselement 2 ausgeübte Presskraft 17 des Presswerkzeugs, die in Fig. 1 durch Pfeile angedeutet ist, wird dieses verformt. Im gezeigten Ausführungsbeispiel wird es in einem mittleren Bereich seiner Längserstreckung umfänglich radial nach innen eingedrückt, so dass es mit einer Einschnürung versehen wird.

Durch die Verformung des Krafteinleitungselements 2 wird Presskraft 17 des Presswerkzeugs über das Krafteinleitungselement 2 auf das Faserverbundteil 1 übertragen und wirkt somit auf die äußere Oberfläche des Faserverbundteils 1 ein. Thermoplastisches Matrixmaterial 4, welches durch die Erwärmung erweicht ist, wird dadurch aus dem Bereich, in dem die Pressbacken 7, 8 einwirken, verdrängt. Dadurch ändert sich die Geometrie des Verbindungsabschnitts 6, hier im mittleren Bereich seiner Längserstreckung, derart, dass an der Stelle der Einschnürung des Krafteinleitungselements 2 eine Einschnürung des Faserverbundteils 1 ausgebildet wird. Diese Einschnürung, die umfänglich bzw. ringförmig ausgebildet ist, liegt in einem Bereich des Verbindungsabschnitts 6, der zwischen zylindrischen Bereichen des Verbindungsabschnitts 6 angeordnet ist. Die Einschnürungen des Krafteinleitungselements 2 und des Faserverbundteils 1 liegen aneinander an und eine in Längsrichtung des Faserverbundteils 1 wirkende formschlüssige Verbindung wird ausgebildet.

Das aus dem Bereich der Einschnürung des Faserverbundteils 1 verdrängte Matrixmaterial 4 führt zu einer Verdickung (Querschnittsvergrößerung) an einer anderen Stelle des Faserverbundteils 1 und/oder kann aus dem stirnseitigen Ende des Faserverbundteils 1, welches an den Verbindungsabschnitt 6 im gezeigten Ausführungsbeispiel anschließt, zumindest teilweise austreten, wenn dieses Ende nicht durch das Krafteinleitungselement 2 abgeschlossen ist.

Das Krafteinleitungselement 2 kann beispielsweise wie gezeigt einen nach außen abstehenden Ringflansch 9 aufweisen, über welchen es mit einem anderen, in den Figuren nicht dargestellten Teil, beispielsweise einer lasttragenden Struktur verbunden werden kann, um Kräfte zu übertragen.

Im zuvor beschriebenen Ausführungsbeispiel wurde davon ausgegangen, dass die Anbringung des Krafteinleitungselements 2 erfolgt, nachdem der Herstellungsprozess des Faserverbundteils 1 abgeschlossen ist. Denkbar und möglich wäre es aber auch, die Verankerung bei der Herstellung des Faserverbundteils durchzuführen, insbesondere bei der Extrusion oder Pultrusion, nachdem dieses aus der Düse ausgetreten ist und somit seine ursprüngliche Formgebung zumindest im Verbindungsabschnitt 6 und einem daran anschließenden Teil des Faserverbundteils erhalten hat und solange sich die Temperatur des Matrixmaterials 4 im Verbindungsabschnitt 6 noch oberhalb der Glasübergangstemperatur, vorzugsweise oberhalb des Schmelzpunkts befindet. Ein eigener Erwärmungsschritt könnte dadurch bei der Ausführung des erfindungsgemäßen Verfahrens entfallen.

Das in den Fig. 1 bis 5 dargestellte Krafteinleitungselement 2 kann wie dargestellt im Endbereich des Faserverbundteils 1 verankert werden oder auch in einem mittleren Abschnitt des Faserverbundteils 1.

Die in Fig. 6 dargestellte Ausführungsform unterscheidet sich lediglich dadurch vom zuvor beschriebenen Ausführungsbeispiel, dass das Krafteinleitungselement 2 zwar wiederum hülsenförmig, hier aber mit einem den Innenraum des Krafteinleitungselements 2 am einen Ende verschließenden Boden 10 ausgebildet ist. Dieses Krafteinleitungselement 2 kann somit nur am Ende des Faserverbundteils 1 angebracht werden, d.h. der Verbindungsabschnitt 6 bildet einen Endabschnitt des Faserverbundteils 1.

Anstelle einer Ausübung der Presskraft auf das Krafteinleitungselement 2, die von diesem auf die äußere Oberfläche des Faserverbundteils 1 übertragen wird, kann die Presskraft 17 durch ein Presswerkzeug auch direkt auf das Faserverbundteil 1 im Bereich von dessen Verbindungsabschnitt 6 ausgeübt werden, wie dies schematisch in Fig. 7 dargestellt ist. Das Presswerkzeug kann beispielsweise zwei Pressbacken 11, 12 umfassen, die sich im an das Faserverbundteil 1 angelegten Zustand jeweils über 180° um dessen Umfang erstrecken und in dieser Weise halbschalenförmig ausgebildet sind, wobei sie in einem mittleren Bereich ihrer Längserstreckung eine nach innen abstehende Erhöhung 13 aufweisen. Nachdem das Faserverbundteil 1 im Verbindungsabschnitt 6 auf eine Temperatur gebracht worden ist, die oberhalb der Glasübergangstemperatur, vorzugsweise oberhalb des Schmelzpunkts liegt, werden die Pressbacken 11, 12 an das Faserverbundteil 1 angestellt, wodurch auf die äußere Oberfläche des Faserverbundteils 1 eine Presskraft 17 ausgeübt wird und die Geometrie des Faserverbundteils 1 im Bereich seines Verbindungsabschnitts 6 geändert wird, im gezeigten Ausführungsbeispiel eine umfängliche Einschnürung ausgebildet wird.

Nachdem der Verbindungsabschnitt abgekühlt ist, wird ein Krafteinleitungselement auf den Verbindungsabschnitt aufgesetzt. Dieses ist in diesem Ausführungsbeispiel mehrteilig ausgebildet, so dass die Teile radial zugeführt werden können, worauf sie im auf den Verbindungsabschnitt 6 aufgesetzten Zustand miteinander verbunden werden, beispielsweise mittels Verschraubungen oder mittels Spannringen.

Die Pressbacken 11, 12 können sich über die Länge des Verbindungsabschnitts 6, über einen Teil dieser Länge oder über diese hinaus erstrecken.

Anstelle einer nachträglichen Verformung des Verbindungsabschnitts 6 nach der Herstellung des Faserverbundteils 1, könnte die Geometrieänderung mittels des Presswerkzeugs wiederum bei der Herstellung des Faserverbundteils 1 durchgeführt werden, wenn der Verbindungsabschnitt 6 noch eine ausreichend hohe Temperatur aufweist.

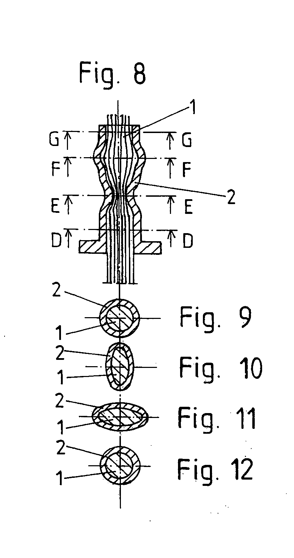

Bei dem in den Fig. 8 bis 12 dargestellten Ausführungsbeispiel wird im Vergleich zu den zuvor beschriebenen Ausführungsformen ein größerer Teil der Verstärkungsfasern aus seiner ursprünglichen Lage ausgelenkt bzw. kommt es zu stärkeren Auslenkungen der Fasern 4 durch die Geometrieänderung im Verbindungsabschnitt 6. Der ursprünglich kreisrunde Querschnitt des Faserverbundteils 1 wird hier im Verbindungsabschnitt 6 in seiner Form geändert, und zwar werden im Bereich der Schnittlinien E-E und F-F ovale Querschnittsformen ausgebildet, deren längere Achsen rechtwinklig zueinander stehen. Insgesamt weist der Verbindungsabschnitt 6 einen ersten und zweiten zylindrisch ausgebildeten Bereich (an den beiden Enden des Verbindungsabschnitts 6) und einen dazwischenliegenden Bereich mit einer demgegenüber geänderten Geometrie auf. Hierbei werden in dem dazwischenliegenden Bereich bezogen auf rechtwinklig zur Längserstreckung des Faserverbundteils 1 liegende Richtungen Einschnürungen des Durchmessers des Faserverbundteils ausgebildet. Das ursprünglich im Querschnitt kreisrunde hülsenförmige Krafteinleitungselement 2 wird korrespondierend verformt. Die Verformung kann wiederum durch ein Pressbacken aufweisendes Presswerkzeug durchgeführt werden.

In den Ausführungsformen, in welchen das Krafteinleitungselement 2 zusammen mit dem Faserverbundteil 1 verformt wird, besteht es aus einem Material, welches plastisch verformbar ist, zumindest bei einer erhöhten Temperatur. Vorzugsweise besteht das Krafteinleitungselement 2 aus Metall. Das Krafteinleitungselement 2 muss die durch die auftretenden Zug- bzw. Druckkräfte entstehenden, im Sinne einer Spreizung wirkenden Normalkräfte aufnehmen können.

Die Herstellung der Geometrieänderung im Verbindungsabschnitt 6 und Verbindung mit dem Krafteinleitungselement 2 kann auch direkt beim Endanwender vor Ort erfolgen.

Zur lokalen Verstärkung oder zur besseren Krafteinleitung können im Verbindungsabschnitt 6 zusätzliche Fasern, textile Flächengebilde, Schläuche, Tapes, Hülsen oder dgl. zwischen dem Faserverbundteil 1 und dem Krafteinleitungselement 2 eingebracht werden. Zur Erzielung anderer Effekte, z.B. zur Dämpfung, Isolation usw., können auch Folien, Schläuche textile Flächengebilde usw. aus anderen Materialien, beispielsweise Elastomeren, eingebracht werden.

Im Kern des Faserverbundteils kann auch ein Funktionselement integriert sein, beispielsweise eine Glasfaserleitung. Die Geometrieänderung des Faserverbundteils 1 im Verbindungsabschnitt 6 erfolgt hierbei so, dass der Kern davon unbeeinträchtigt bleibt. Das Funktionselement kann z.B. ein medium-, informations- oder energieübertragendes Element sein, z.B. ein Lichtleiter, Wasserrohr, usw.

Das Faserverbundteil kann im Verbindungsabschnitt einen vollen Querschnitt aufweisen, d. h. keinen Hohlraum aufweisen. Wenn die Verankerung mit einem über einen Teil der Länge, der mindestens teilweise den Verbindungsabschnitt umfasst, oder insgesamt rohrförmig ausgebildeten Faserverbundteil durchgeführt werden soll, so kann vor dem Einwirken der Presskraft in den Bereich der einwirkenden Presskraft ein den Hohlraum ausfüllender Kern eingebracht werden. Dieser kann in der Folge wiederum entfernt werden.

Vorzugsweise umgeben die jeweiligen Krafteinleitungselemente das jeweilige Faserverbundteil nur an seiner Außenseite, weisen also keine innerhalb des Faserverbundteils liegende Teile auf.

### Legende

zu den Hinweisziffern:
- 1: Faserverbundteil
- 2: Krafteinleitungselement
- 3: Faser
- 4: Matrixmaterial
- 5: Kavität
- 6: Verbindungsabschnitt
- 7: Pressbacken
- 8: Pressbacken
- 9: Ringflansch
- 10: Boden
- 11: Pressbacken
- 12: Pressbacken
- 13: Erhöhung
- 16: Längsrichtung
- 17: Presskraft

## Patentansprüche

1. Verfahren zur Ausbildung einer eine Längskraft übertragenden Verankerung eines länglichen Faserverbundteils (1), insbesondere in Form einer Zug- oder Druckstange, welches ein thermoplastisches Matrixmaterial und darin eingebettete Fasern (3) besitzt, an einem Krafteinleitungselement (2), das eine Kavität (5) aufweist, die das Faserverbundteil (1) über einen Verbindungsabschnitt (6) seiner Längserstreckung aufnimmt, wobei zwischen dem Faserverbundteil (1) und dem Krafteinleitungselement (2) eine in Längsrichtung (16) des Faserverbundteils (1) wirkende formschlüssige Verbindung ausgebildet wird, **dadurch gekennzeichnet, dass** zur Ausbildung der formschlüssigen Verbindung die Geometrie des Faserverbundteils (1), während seine Temperatur über der Glasübergangstemperatur des Matrixmaterials (4) des Faserverbundteils (1) liegt, im Verbindungsabschnitt (6) durch eine auf die äußere Oberfläche des Faserverbundteils (1) einwirkende Presskraft (17) derart geändert wird, dass die Querschnittsfläche des Verbindungsabschnitts (6) über dessen Längsausdehnung in ihrem Flächeninhalt geändert wird, wobei sich der auf zumindest eine bestimmte rechtwinklig zur Längsrichtung des Faserverbundteils (1) liegende Richtung bezogene Durchmesser des Faserverbundteils (1) über die Längserstreckung des Verbindungsabschnitts (6) ändert.

2. Verfahren nach Anspruch 1, **dadurch gekennzeichnet, dass** die Presskraft (17) quer zur Längsrichtung (16) des Faserverbundteils (1) auf dieses einwirkt.

3. Verfahren nach Anspruch 1 oder Anspruch 2, **dadurch gekennzeichnet, dass** die Presskraft (17) durch ein Presswerkzeug auf das Krafteinleitungselement (2) ausgeübt wird und über das Krafteinleitungselement (2) auf die äußere Oberfläche des Faserverbundteils (1) übertragen wird.

4. Verfahren nach Anspruch 3, **dadurch gekennzeichnet, dass** durch die ausgeübte Presskraft (17) das Krafteinleitungselement (2) gleichzeitig mit dem Faserverbundteil (1) verformt wird.

5. Verfahren nach Anspruch 1 oder Anspruch 2, **dadurch gekennzeichnet, dass** die Presskraft (17) durch ein Presswerkzeug direkt auf die äußere Oberfläche des Faserverbundteils (1) ausgeübt wird.

6. Verfahren nach Anspruch 5, **dadurch gekennzeichnet, dass** das Krafteinleitungselement (2) aus mindestens zwei getrennten Teilen ausgebildet wird, die auf den bereits mit der Geometrieänderung versehenen Verbindungsabschnitt (6) des Faserverbundteils (1) aufgesetzt werden und an diesem befestigt werden.

7. Verfahren nach einem der Ansprüche 1 bis 6, **dadurch gekennzeichnet, dass** die Geometrieänderung des Verbindungsabschnitts (6) des Faserverbundteils (1) bei der Herstellung des Faserverbundteils (1), welche vorzugsweise durch Extrusion oder Pultrusion erfolgt, durchgeführt wird, während die Temperatur des Verbindungsabschnitts (6) nach dessen ursprünglicher Formgebung noch über der Glasübergangstemperatur liegt.

8. Verfahren nach einem der Ansprüche 1 bis 6, **dadurch gekennzeichnet, dass** vor der Ausübung der Presskraft (17) das Faserverbundteil (1) zumindest im Verbindungsabschnitt (6) auf die über der Glasübergangstemperatur liegende Temperatur erwärmt wird.

9. Verfahren nach einem der Ansprüche 1 bis 8, **dadurch gekennzeichnet, dass** die Temperatur des Matrixmaterials (4) im Verbindungsabschnitt (6) bei der Geometrieänderung des Verbindungsabschnitts (6) über der Schmelztemperatur des Matrixmaterials (4) liegt.

10. Verfahren nach einem der Ansprüche 1 bis 9, **dadurch gekennzeichnet, dass** das Krafteinleitungselement (2) hülsenförmig ausgebildet ist.

11. Verfahren nach einem der Ansprüche 1 bis 10, **dadurch gekennzeichnet, dass** das Faserverbundteil (1) vor Einwirken der Presskraft zumindest über die Länge des Verbindungsabschnittes (6), vorzugweise über seine gesamte Länge, eine konstante Querschnittsfläche und Querschnittsgeometrie aufweist.

12. Verankerung, von der eine Längskraft übertragbar ist, zwischen einem länglichen Faserverbundteil (1), insbesondere in Form einer Zug- oder Druckstange, welches ein thermoplastisches Matrixmaterial und darin eingebettete Fasern (3) besitzt, und einem Krafteinleitungselement (2), das eine Kavität (5) aufweist, die das Faserverbundteil (1) über einen Verbindungsabschnitt (6) seiner Längserstreckung aufnimmt, wobei zwischen dem Faserverbundteil (1) und dem Krafteinleitungselement (2) eine in Längsrichtung (16) des Faserverbundteils (1) wirkende formschlüssige Verbindung ausgebildet wird, **dadurch gekennzeichnet, dass** der Verbindungsabschnitt (6) bezogen auf zumindest eine rechtwinklig zur Längsrichtung des Faserverbundteils (1) liegende Richtung mindestens eine Einschnürung im Durchmesser des Faserverbundteils (1) aufweist.

13. Verankerung nach Anspruch 12, **dadurch gekennzeichnet, dass** die Einschnürung im Durchmesser ringförmig ausgebildet ist.

14. Verankerung nach Anspruch 12 oder Anspruch 13, **dadurch gekennzeichnet, dass** die Einschnürung zwischen ersten und zweiten zylindrisch ausgebildeten Bereichen des Verbindungsabschnitts angeordnet ist.

15. Verankerung nach einem der Ansprüche 12 bis 14, **dadurch gekennzeichnet, dass** die Kavität (5) des Krafteinleitungselements (2) eine Verringerung ihres Durchmessers aufweist, die mit der Einschnürung des Faserverbundteils (1) zusammenwirkt.

16. Verankerung nach Anspruch 15, **dadurch gekennzeichnet, dass** die Verringerung des Durchmessers der Kavität (5) zwischen ersten und zweiten zylindrisch ausgebildeten Bereichen des Krafteinleitungselements (2) liegt.
